(19) Europäisches Patentamt
European Patent Office
Office européen des brevets

(11) **EP 3 818 800 A1**

(12) **EUROPÄISCHE PATENTANMELDUNG**

(43) Veröffentlichungstag:
**12.05.2021 Patentblatt 2021/19**

(21) Anmeldenummer: **20194776.9**

(22) Anmeldetag: **07.09.2020**

(51) Int Cl.:
**A01B 76/00** (2006.01)   **G06Q 50/02** (2012.01)
**A01B 69/04** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.11.2019 DE 102019130090**

(71) Anmelder: **CLAAS KGaA mbH**
**33428 Harsewinkel (DE)**

(72) Erfinder:
• **Amsbeck, Janina**
**49124 Georgsmarienhütte (DE)**
• **Ueckert, Kevin**
**48151 Münster (DE)**

(74) Vertreter: **CLAAS Gruppe**
**Mühlenwinkel 1**
**33428 Harsewinkel (DE)**

(54) **VERFAHREN ZUR AUTOMATISCHEN ERSTELLUNG EINER DOKUMENTATION**

(57)   Die vorliegende Erfindung beschäftigt sich mit der automatischen Erstellung einer Dokumentation (18), wobei in der Dokumentation (18) eine Arbeit einer landwirtschaftlichen Arbeitsmaschine (1) dokumentiert wird, wobei ein Ortsbestimmungssystem (3) während der Erbringung der Arbeit eine Bewegungsspur (7) der Arbeitsmaschine (1) aufzeichnet und zur Generierung der Bewegungsspur (7) zumindest Positionsdaten (9) und ein den jeweiligen Positionsdaten (9) zugeordneter Zeitstempel (10) verfügbar sind und wobei die Bewegungsspur (7) analysiert wird, wobei mittels der Datenanalyse (17) ein Bewegungsmuster (26) der landwirtschaftlichen Arbeitsmaschine (1) abgeleitet und aus dem Bewegungsmuster (26) auf die Art der Arbeit (28) der landwirtschaftlichen Arbeitsmaschine (1) geschlossen wird.

EP 3 818 800 A1

Fig. 1

**Beschreibung**

Die vorliegende Erfindung beschäftigt sich mit der automatischen Erstellung einer Dokumentation für die Arbeit einer landwirtschaftlichen Arbeitsmaschine. Unter landwirtschaftlichen Arbeitsmaschinen sind insbesondere selbstfahrende landwirtschaftliche Arbeitsmaschinen wie Traktoren, Mähdrescher und Feldhäcksler zu verstehen.

Die Dokumentation von Arbeitsprozessen in der Landwirtschaft erhält eine immer größere Bedeutung. Dies ergibt sich zum einen aus dem Erfordernis der Nachvollziehbarkeit von geleisteter Tätigkeit im Bereich von Lohnunternehmen und in Großbetrieben mit mehreren Mitarbeitern. Zum anderen ergibt sich ebenso aus der zunehmenden gesetzlichen Nachweispflicht jedes Landwirtes insbesondere im Bereich Düngung und Pflanzenschutz ein Erfordernis der Dokumentation.

Aus dem Stand der Technik sind Dokumentationssysteme bekannt, die einige Arbeitsdaten speichern und dem Bediener der Arbeitsmaschine die Dokumentation erleichtern. Der Bediener muss allerdings noch viele Daten manuell dokumentieren, was aufwändig und fehleranfällig ist.

Ein Verfahren zur Speicherung von Daten eines Arbeitsprozesses einer landtechnischen Maschine ist aus der DE102017105493A1 bekannt.

Ein elektronisches Zeitmanagementsystem das den Zeitraum sowie die überfahrene Fläche automatisch dokumentiert ist aus der DE102014108644A1 bekannt.

Zudem ist aus der nicht vorveröffentlichen DE 102019125507A1 ein Verfahren zur automatischen Erstellung einer Dokumentationsbuchung bekannt geworden, welches basierend auf GPS-Daten und der Zeitinformation eine Bewegungsspur ermittelt und wobei dieser aufgezeichneten Bewegungsspur zusätzlich Arbeitsdaten zugeordnet werden. Die während der Erbringung der Arbeit erfassten Arbeitsdaten werden nach Art der erbrachten Arbeit klassifiziert und sodann werden die Klassen der erbrachten Arbeit automatisch in die Dokumentationsbuchung eingefügt. Dies hat insbesondere den Effekt, dass das Buchungssystem sehr präzise arbeitet, da es auf eine Vielzahl von Arbeitsdaten zurückgreifen kann, wobei diese Arbeitsdaten insbesondere die Positionen für eine Vielzahl von Feldern und/oder eine Lokalitätskategorie für eine Vielzahl von Orten und/oder die Art der angebauten Frucht auf zumindest einem Feld und/oder die Klasse zumindest einer früher erbrachten Arbeit auf zumindest einem Feld sein können.

Liegen derartige Daten nicht oder nur in unzureichendem Umfang vor oder müssen derartige Daten aus spezifischen Datenquellen bezogen werden erfordert ein derartiges Buchungssystem zumindest einen zusätzlichen Arbeitsaufwand zur Beschaffung und Zusammenführung der Daten.

Es ist deshalb Aufgabe der Erfindung die beschriebenen Nachteile des Standes der Technik zu vermeiden und insbesondere die Erstellung einer Dokumentationsbuchung weitgehend zu automatisieren.

Diese Aufgabe wird erfindungsgemäß durch ein Verfahren mit den kennzeichnenden Merkmalen des Anspruchs 1 und eine Vorrichtung zur Durchführung dieses Verfahrens nach Anspruch 17 gelöst.

Indem das Verfahren zur automatischen Erstellung einer Dokumentation, die Arbeit einer landwirtschaftlichen Arbeitsmaschine dokumentiert und ein Ortsbestimmungssystem während der Erbringung der Arbeit eine Bewegungsspur der Arbeitsmaschine aufzeichnet, wobei zur Generierung der Bewegungsspur zumindest Positionsdaten und ein den jeweiligen Positionsdaten zugeordneter Zeitstempel verfügbar sind und die Bewegungsspur analysiert wird, wobei mittels der Datenanalyse ein Bewegungsmuster der landwirtschaftlichen Arbeitsmaschine abgeleitet und aus dem Bewegungsmuster auf die Art der Arbeit der landwirtschaftlichen Arbeitsmaschine geschlossen wird, wird sichergestellt, dass die Erstellung einer Dokumentationsbuchung weitgehend automatisiert erfolgen kann.

Eine besonders einfache Umsetzung des erfindungsgemäßen Verfahrens ergibt sich dann, wenn die Positionsdaten und der die Zeitinformation umfassende Zeitstempel von einem in der landwirtschaftlichen Arbeitsmaschine mitgeführten Mobiltelefon generiert werden. Dies hat den Vorteil, dass bereits das vom Bediener mitgeführte Mobiltelefon das bestimmungsgemäße Verfahren abarbeiten kann, ohne dass der Bediener in diesen Prozess involviert ist.

In einer vorteilhaften Ausgestaltung der Erfindung werden die Positionsdaten von einem GPS generiert, welches in jedem Mobiltelefon verfügbar und zudem auch in landwirtschaftlichen Arbeitsmaschinen weit verbreitet ist.

Damit es möglich wir allein aus GPS-Daten auf ein Bewegungsmuster einer landwirtschaftlichen Arbeitsmaschine und die Art der von ihr verrichteten Tätigkeit zu schließen, wird in einer vorteilhaften Ausgestaltung der Erfindung die Datenanalyse mittels eines computerimplementierten Verfahren unter Nutzung einer künstlichen Intelligenz zur Ableitung des Bewegungsmusters und der Art der Tätigkeit vorgenommen.

In diesem Zusammenhang ergibt sich ein besonders wirkungsvoll arbeitendes Verfahren, wenn in einer vorteilhaften Weiterbildung das Verfahren zur Nutzung einer künstlichen Intelligenz zumindest ein trainierbares Maschinenlernverfahren und in Kennlinien hinterlegte Parameterabhängigkeiten verfügbar sind.

Indem das Maschinenlernverfahren zumindest einen Klassifizierungsalgorithmus umfasst und der Klassifizierungsalgorithmus zumindest eine Klassifizierung nach Feldfahrt und Straßenfahrt ermöglicht, wird sichergestellt, dass die GPS-basierten Ortspunkte der Bewegungsspur eindeutig entweder einer Straßenfahrt oder einer Fahrt auf einem Feld zuordenbar sind.

Indem das Maschinenlernverfahren zumindest einen Clusteralgorithmus umfasst, wobei der Clusteralgorithmus zumindest eine Unterscheidung von Feldern ermöglicht, wird sichergestellt, dass die im Klassifizierungsalgorithmus identifizierten Ortspunkte einer Feldfahrt bestimmten Feldern zugeordnet werden können.

Indem das Maschinenlernverfahren zumindest einen Feldgrenzen-Identifikationsalgorithmus umfasst, wobei der Feldgrenzen-Identifikationsalgorithmus zumindest die Identifikation von Feldgrenzen umfasst, wird sichergestellt, dass den im Clusteralgorithmus identifizierten Feldern konkrete Feldgrenzen zugeordnet werden können.

In einer vorteilhaften Ausgestaltung der Erfindung sind der Klassifizierungsalgorithmus, der Clusteralgorithmus und der Feldgrenzen-Identifikationsalgorithmus miteinander kombiniert, wobei die Kombination so strukturiert ist, dass die Schwächen eines vorhergehenden Algorithmus durch einen nachfolgenden Algorithmus ausgeglichen werden. Dies hat den Effekt, dass die Zuordnung von Ortspunkte zu einem bestimmten Feld oder zu einer Straßenfahrt von Algorithmus zu Algorithmus immer präziser wird.

Dieser Effekt wird auch dadurch noch verstärkt, dass in einer weiteren vorteilhaften Ausgestaltung der Erfindung aus den Positionsdaten und den die Zeitinformation umfassenden Zeitstempeln Kennzahlen abgeleitete werden und die abgeleiteten Kennzahlen die Differenzierung der Ortspunkte innerhalb eines Algorithmus unterstützen.

Die Arbeitsweise, insbesondere die Genauigkeit des erfindungsgemäßen Verfahren kann in einer vorteilhaften Ausgestaltung auch dadurch weiter gesteigert werden, dass zumindest einer der Algorithmen Klassifizierungsalgorithmus, Clusteralgorithmus und/oder Feldgrenzen-Identifikationsalgorithmus eine Kostenfunktion anwendet und die Kostenfunktion für jeden Anwendungsfall spezifisch strukturiert ist.

In einer vorteilhaften Ausgestaltung der Erfindung kann die Datenanalyse neben den Positionsdaten und den die Zeitinformation umfassenden Zeitstempeln weitere, maschinen- und/oder einsatzspezifische Parameter berücksichtigt. Dies hat insbesondere den Effekt, dass die von dem erfindungsgemäßen Verfahren generierten Informationen aufgewertet werden, sodass der Nutzer die Daten vielfältiger verwenden kann.

Indem die aus der Datenanalyse abgeleiteten Bewegungsmuster eine automatische Erkennung der Feldgrenzen ermöglichen, wird sichergestellt, dass der Nutzer der Daten präzise Informationen über die Geometrie des jeweiligen Feldes, insbesondere über den von der landwirtschaftlichen Arbeitsmaschine überfahrenen Teil des Feldes erhält.

In einer vorteilhaften Ausgestaltung der Erfindung ist vorgesehen, dass zumindest die automatisch erkannten Feldgrenzen an externe Datenverarbeitungssysteme, insbesondere externe Farmmanagement-Softwaresysteme exportiert werden. Dies hat vor allem den Effekt, dass auf Basis dieser Daten Einsatzpläne für Folgemaschinen, sogenannte Routenpläne erstellt werden können.

Zudem hat das erfindungsgemäße Verfahren den Effekt, dass aus den mittels der Datenanalyse abgeleiteten Bewegungsmustern eine Beurteilung der Maschineneinsatzeffizienz abgeleitet werden, wobei dies zumindest die Bestimmung der Prozesszeit und/oder der Stillstandzeit und/oder einer Transitzeit umfasst.

In einer vorteilhaften Weiterbildung der Erfindung wird aus dem Bewegungsmuster der landwirtschaftlichen Arbeitsmaschine die Art der Arbeit der landwirtschaftlichen Arbeitsmaschine abgeleitet und zur Dokumentationserstellung herangezogen. Auf diese Weise wird es mit sehr einfachen Mittel möglich, die Arbeit einer landwirtschaftlichen Arbeitsmaschine zu dokumentieren. In diesem Zusammenhang ist es von besonderem Vorteil, wenn die Dokumentationserstellung die automatisierte Erstellung einer Rechnung umfasst.

Eine hohe Flexibilität in der Nachnutzung der auf einfache Weise mittels des erfindungsgemäßen Verfahrens generierten Daten wird dann erreicht, wenn in einer vorteilhaften Ausgestaltung das oder die Ergebnisse der Datenanalyse, zumindest das ermittelte Bewegungsmuster und die ermittelte Art der Arbeit der landwirtschaftlichen Arbeitsmaschine an Farmmanagementsysteme übertragen werden.

Eine besonders effiziente Umsetzung des erfindungsgemäßen Verfahrens in einer Vorrichtung wird dann erreicht, wenn die Vorrichtung zur automatischen Erstellung einer Dokumentation eingerichtet ist und in der Dokumentation eine Arbeit einer landwirtschaftlichen Arbeitsmaschine dokumentiert wird, wobei ein Ortsbestimmungssystem während der Erbringung der Arbeit eine Bewegungsspur der Arbeitsmaschine mittels Arbeitsdaten aufzeichnet, wobei zur Generierung der Bewegungsspur zumindest Positionsdaten und ein den jeweiligen Positionsdaten zugeordneter Zeitstempel verfügbar sind und die Bewegungsspur analysiert wird, wobei mittels der Datenanalyse ein Bewegungsmuster der landwirtschaftlichen Arbeitsmaschine abgeleitet und aus dem Bewegungsmuster auf die Art der Arbeit der landwirtschaftlichen Arbeitsmaschine geschlossen wird

Weitere vorteilhafte Ausgestaltungen sind Gegenstand weiterer Unteransprüche und werden nachfolgend an Hand in mehreren Figuren dargestellter Ausführungsbeispiele beschrieben.

Es zeigen:

Figur 1    eine schematische Darstellung des erfindungsgemäßen Verfahrens
Figur 2    eine Flussbild des erfindungsgemäßen Verfahrens
Figur 3    ein Flussbild eines Details des erfindungsgemäßen Verfahrens
Figur 4    eine detaillierte Darstellung des gesamten Verfahrens einschließlich der zugehörigen Vorrichtungen

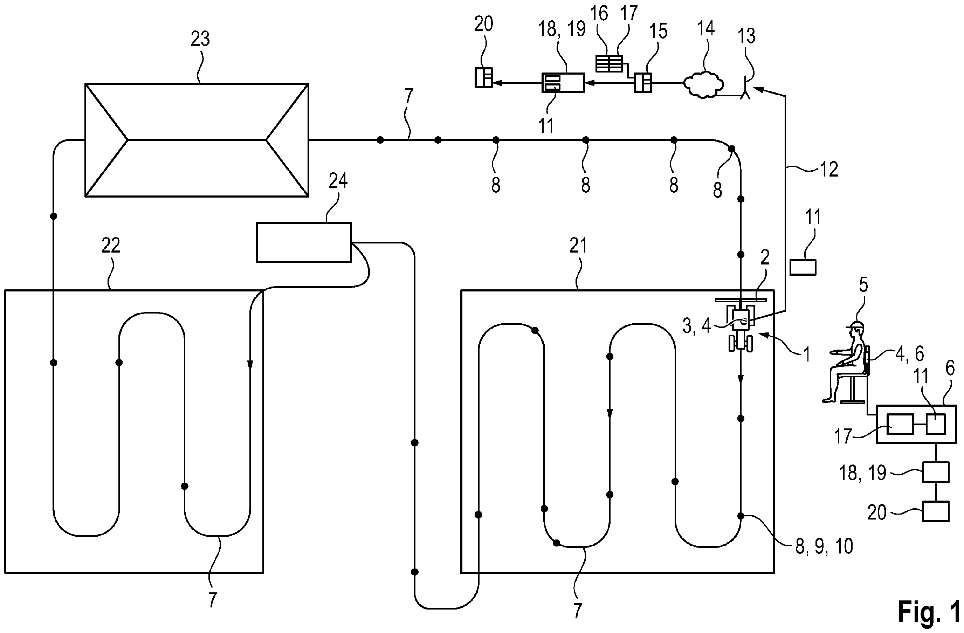

Figur 1 zeigt eine landwirtschaftliche Arbeitsmaschine 1, hier ein Traktor mit einer Feldspritze als Anbaugerät 2. Traktor und Anbaugerät können über einen Kommunikationsbus Informationen austauschen. Die Arbeitsmaschine 1 ist mit einem Ortsbestimmungssystem 3 ausgestattet. Das Ortsbestimmungssystem 3 ist erfindungsgemäß als Mobiltelefon 4 ausgeführt und entweder der landwirtschaftlichen Arbeitsmaschine 1 fest zugeordnet oder wird von einem Bediener 5 der landwirtschaftlichen Arbeitsmaschine 1 mitgeführt. Dem das Ortungssystem 3 umfassenden Mobiltelefon 4 ist ein noch detailliert zu beschreibendes Applikationsmodul 6 zugeordnet, welches während der Erbringung der Arbeit der landwirtschaftlichen Arbeitsmaschine 1 eine Bewegungsspur 7 aufzeichnet. Die Bewegungsspur 7 besteht aus einer sortierten Liste von Ortspunkten 8. Jeder Ortspunkt 8 gibt einen Ort in Form von Positionsdaten 9 an und wird mit einem Zeitstempel 10 aufgezeichnet. Die Ortspunkte 8 der Bewegungsspur 7 stellen Arbeitsdaten 11 dar.

Die Arbeitsdaten 11 werden entweder unmittelbar im Applikationsmodul 6 des Mobiltelefons 4 in erfindungsgemäßer und noch näher zu beschreibender Weise verarbeitet oder über eine Mobilfunkstrecke 12 an eine Empfängerstation 13 weitergeleitet. Von der Empfängerstation 13 werden die Arbeitsdaten 11 durch ein Netzwerk 14, bspw. das Internet, an ein Rechnersystem 15 weitergeleitet. Auf dem Rechnersystem 15 ist eine Datenbank 16 vorhanden. Das Rechnersystem 15 würde dann in Analogie zum Applikationsmodul 6 des Mobiltelefons 4 in noch näher zu beschreibender Weise die Arbeitsdaten 11 verarbeiten. Die Datenanalyse 17 der Arbeitsdaten 11 erfolgt damit entweder unmittelbar im Applikationsmodul 6 des Mobiltelefons 4 oder in der Datenbank 16 des externen Rechnersystems 15. Ausgehend von dieser Datenanalyse 17 erstellt sodann das Applikationsmodul 6 oder das externe Rechnersystem 15 die erfindungsgemäße und noch näher zu beschreibende Dokumentation 18. Danach erstellt das Rechnersystem 15 oder das Applikationsmodul 6 eine noch näher zu beschreibende Dokumentationsbuchung 19 die sodann in einem Dokumentationserfassungssystem 20 gebucht werden kann.

Die aufgezeichnete Bewegungsspur 7 kann erfindungsgemäß die Bewegung der landwirtschaftlichen Arbeitsmaschine 1 auf einer Vielzahl von Feldern 21, 22, auf einem Wegen zu einem Hof 23 oder einem Zwischenziel 24, wie etwa einem Transporthänger oder einer Lagerstätte, umfassen.

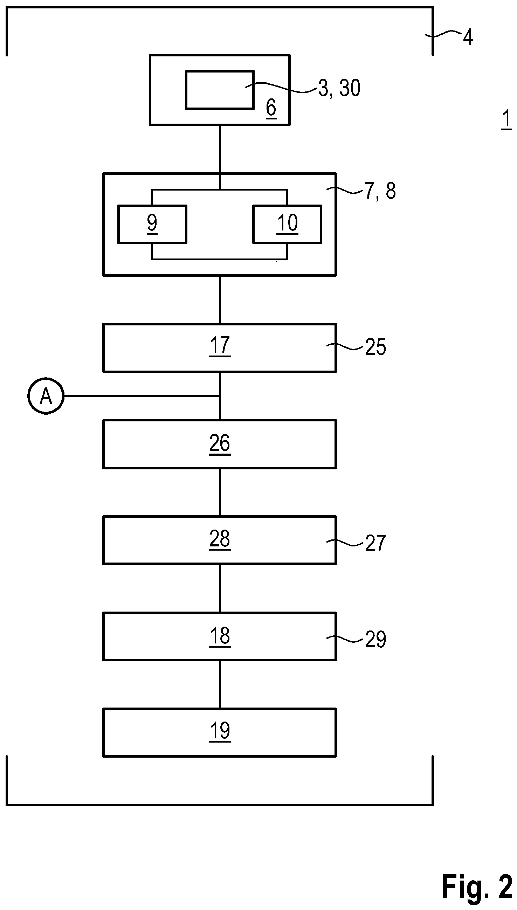

Figur 2 beschreibt nun zunächst das erfindungsgemäße Verfahren schematisch am Beispiel eines Flussbildes. Unter Einbindung des dem Mobiltelefon 4 zugeordnete Ortsbestimmungssystems 3 generiert der Applikationsmodul 6 die erfindungsgemäßen Positionsdaten 9 und die den jeweiligen Positionsdaten 9 zugeordneten Zeitstempel 10, wobei jedes Datenpaar 9, 10 einen Ortspunkt 8 der Bewegungsspur 7 der landwirtschaftlichen Arbeitsmaschine 1 während der Arbeit der landwirtschaftlichen Arbeitsmaschine 1 repräsentiert. Die sich aus den Ortspunkten 8 ergebende Bewegungsspur 7 wird in einem Folgeschritt 25 der bereits erwähnten Datenanalyse 17 unterzogen. Ergebnis der Datenanalyse 17 ist sodann die Ableitung eines Bewegungsmusters 26 der landwirtschaftlichen Arbeitsmaschine 1. Aus dem abgeleiteten Bewegungsmuster 26 wird sodann in einem weiteren Verfahrensschritt 27 auf die Art der Arbeit 28 der landwirtschaftlichen Arbeitsmaschine 1 geschlossen. Schließlich wird die ermittelte Art der Arbeit 28 der landwirtschaftlichen Arbeitsmaschine 1 genutzt, um in einem weiteren Verfahrensschritt 29 eine noch näher zu beschreibende Dokumentation 18 zu erstellen, die letztlich zum Auslösen einer Dokumentationsbuchung 19 genutzt werden kann.

Im einfachsten Fall kann das die Positionsdaten 9 und die Zeitstempel 10 generierende Ortsbestimmungssystem 3 als ein GPS 30 ausgebildet sein.

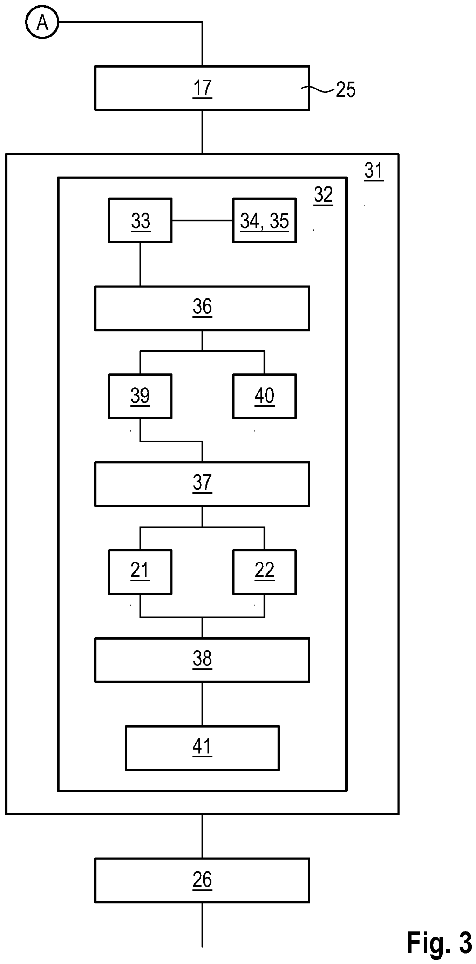

Erfindungsgemäß umfasst die zur Ermittlung des Bewegungsmusters 26 genutzte Datenanalyse 17 gemäß Figur 3 ein computerimplementiertes Verfahren 31 welches eine noch näher zu beschreibende künstliche Intelligenz 32 zur Ableitung des Bewegungsmusters 26 umfasst. In einer praktikabel umsetzbaren Ausgestaltung wird das die künstliche Intelligenz 32 umfassende computerimplementierte Verfahren 31 aus eine Kombination eines trainierbaren Maschinenlernverfahrens 33 und in Kennlinien 34 hinterlegten Parameterabhängigkeiten 35 gebildet. Das Maschinenlernverfahren 33 umfasst erfindungsgemäß einen Klassifizierungsalgorithmus 36, einen Clusteralgorithmus 37 sowie einen Feldgrenzen-Identifikationsalgorithmus 38. Der Klassifizierungsalgorithmus 36 ist so beschaffen, dass die die Bewegungsspur 7 repräsentierenden Ortspunkte 8 nach Feldfahrt 39 und Straßenfahrt 40 klassifiziert werden. Der Clusteralgorithmus 37 ist zumindest so strukturiert, dass die die Feldfahrt 39 repräsentierenden Ortspunkte 8 sodann spezifischen Feldern 21, 22 zugeordnet werden, sodass eine Unterscheidung von Feldern 21, 22 möglich wird. Der Feldgrenzen-Identifikationsalgorithmus 38 ist schließlich so beschaffen, dass die Feldgrenzen 41 der mittels Clusteralgorithmus 37 identifizierten Felder 20, 21 bestimmt werden.

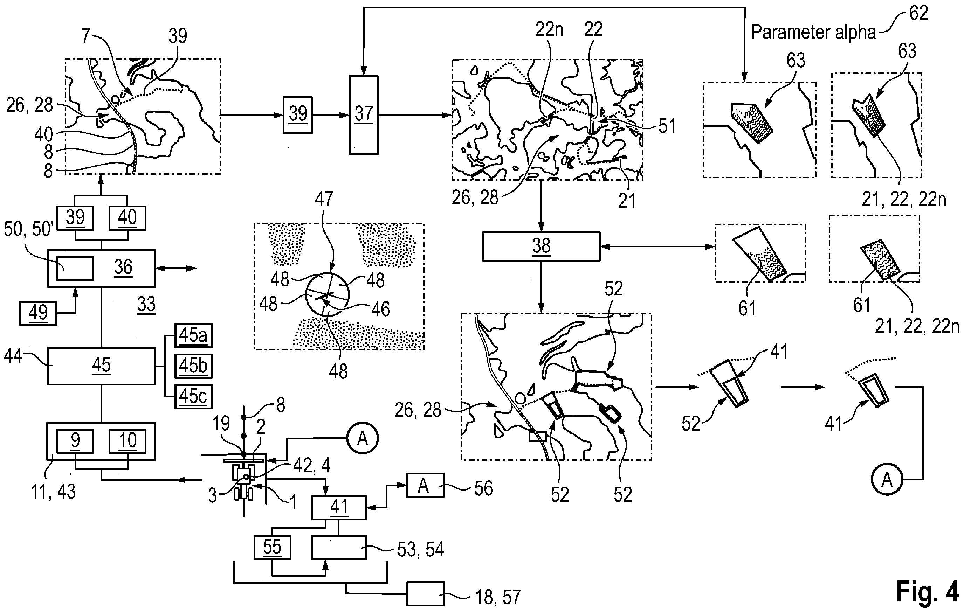

Figur 4 beschreibt nun das erfindungsgemäße Verfahren im Detail. Wie bereits beschrieben generiert die landwirtschaftliche Arbeitsmaschine 1 über ein an der landwirtschaftlichen Arbeitsmaschine 1 angebrachtes Ortsbestimmungssystem 3, ein Kommunikationsmodul 42 oder ein Mobiletelefone 4, Positionsdaten 9 und Zeitstempel 10, welche die Position und den Zeitpunkt der Messung des jeweiligen Ortspunktes 8 repräsentieren. Die Positionsdaten 9 setzt sich aus dem geographischen Längen- und Breitengrad zusammen, sodass die Arbeitsdaten 11 einen Rohdatensatz 43 bilden, welcher aus dem Längengrad, dem Breitengrad und dem Zeitstempel 10 des jeweiligen Ortspunktes 8 besteht. Auf Basis dieser Rohdaten 43 werden in einem ersten Verarbeitungsschritt 44 Kennzahlen 45 berechnet. Dieser Vorgang wird auch als Feature Engineering bezeichnet. Dieser Schritt 44 ist deshalb erforderlich, da es allein auf Basis der Rohdaten 43 nicht gelingt, mittels Klassifikations- oder Clusteralgorithmen 36, 37, wie auch immer strukturierte Muster in Daten zu identifizieren. In dem hier beschriebenen Ausführungsbeispiel werden aus den Rohdaten 43 in dem ersten Verarbeitungsschritt 44 Kennzahlen 45, beispielsweise die Geschwindigkeit 45a und die zurückgelegte Strecke 45b der landwirtschaftlichen Arbeitsmaschine 1 von einem Ortspunkt 8 zum nächsten ermittelt. Zusätzlich werden die gleitenden Mittelwerte dieser berechneten Kennzahlen 45 mit den Episoden 5,10,15,20,....,95,100 berechnet, wobei unter Episode die Mittelwerte der jeweils letzten 5, 10 .. berechneten Kennzahlen 45 verstanden wird. Als weitere Kennzahl 45 wird der Winkel 45c ermittelt, unter welchem sich die landwirtschaftliche Arbeitsmaschine 1 von einem Ortspunkt 8 zum nächsten bewegt hat. Zudem wird die durchschnittliche Entfernung 46 zu den jeweils 5,10,15,... ,145,150 nächstgelegenen Ortspunkten 8 bestimmt und um jeden Ortspunkt 8 ein Kreis 47 mit einem Radius von wahlweise 50,55,60, ...., 95,100 m gezogen. Anschließend wird der Kreis 47 in 4 Quadranten 48 aufgeteilt. Die Anzahl der weiteren Ortspunkte 8 wird pro Quadrant 48 bestimmt.

Anschließend wird mittels des Maschinenlernverfahrens 33 und des generierten Rohdatensatzes 43 und der ermittelten Kennzahlen 45 der Klassifikationsalgorithmus 36 trainiert, welcher den jeweiligen Ortspunkt 8 einer Feldfahrt 39 oder einer Straßenfahrt 40 zuordnet.

Für das Trainieren des Klassifikationsalgorithmus 36 müssen diesem zunächst Beispiele gezeigt werden, also Datensätze 49, welche bereits in Straßenfahrt 40 und Feldfahrt 39 kategorisiert wurden. Das Zuordnen von Rohdaten 43 zu Kategorien wird Labeln genannt und muss in der Regel manuell durchgeführt werden. Jeder Ortspunkt 8 wird daher zunächst manuell durch einen Menschen zu Straßenfahrt 40 oder Feldfahrt 39 zugeordnet. Aus dieser Klassifikation und den berechneten Werten, den Kennzahlen 45, wird dann der Trainingsdatensatz 50 zusammengesetzt. Auf Basis des Trainingsdatensatzes 50 wird der Klassifikationsalgorithmus 36 trainiert, sodass er in der Lage ist, Datensätze 11 ohne menschliches Zutun in Straßen- und Feldfahrt 39, 40 zu klassifizieren. In an sich bekannter und daher hier nicht detailliert erläuterter Weise werden hierfür aus 30% des Trainingsdatensatzes 50 ein Validierungsdatensatz 50' gebildet. Mit Hilfe der verbleibenden Trainingsdaten 50 werden die Parameter des hier üblicher Weise eingesetzten Algorithmus XGBoost bestimmt. Unter Zuhilfenahme des Validierungsdatensatzes 50' und dem hier üblicher Weise eingesetzten Gridsearch-Verfahren werden die sogenannten Hyperparameter bestimmt. Nach Abschluss dieser Trainingsphase ist der Klassifizierungsalgorithmus 36 in der Lage die Ortspunkte 8 einer Bewegungsspur 7 in Ortspunkte 8 einer Straßenfahrt 40 und Ortspunkte 8 einer Feldfahrt 39 zu klassifizieren.

Sodann werden unter Ausschluss derjenigen Ortspunkte 8, welche als Straßenfahrt 40 klassifiziert wurden, weitere noch näher zu beschreibende Berechnungen durchgeführt, wodurch es dem beschriebenen Clusteralgorithmus 37 ermöglichen wird, zwischen verschiedenen Feldern 21, 22, 22n zu unterschieden. Alle als Feldfahrt 39 klassifizierten Ortspunkte 8 werden mittels des Clusteralgorithmus 37 einem Feld 21, 22, 22n zugeordnet.

In Analogie zum Klassifizierungsalgorithmus 36 werden nun weitere Berechnungen durchgeführt, welche dem Clusteralgorithmus 37 ermöglichen, zwischen Feldern 21, 22, 22n zu unterschieden. Hierfür kommen die an sich bekannten und hier nicht näher beschriebenen Berechnungen des sogenannten Centroids 61, des Zentrums aller Ortspunkte 8 eines Clusters, des Abstandes jeden Ortspunktes 8 eines Clusters zum Centroid 61, die Berechnung des Winkels von einem Ortspunkt 8 zum nächstem Ortspunkt 8 und Einteilung der ermittelten Winkel in Klassen etwa (0°-45° und 180°-225°), (45°-90° und 225°-270°), (90°-135° und 270°-315°) und (135°-180° und 315°-360°) in Betracht. Zudem wird für jeden Ortspunkt 8 die Zeitdifferenz zum ersten Ortspunkt 8 in Sekunden bestimmt. Zusätzlich wird ein Feld 21, 22, 22n der Struktur "Ortspunkte in Feldform" künstlich generiert und dem Datensatz für den Prozess Clustering angefügt. Wenn an einem Tag nur ein Feld 21, 22, 22n bearbeitet wurde, ist es schwierig für Clusteralgorithmen 37 dieses zu erkennen, da keine Distanz zu einer weiteren Punktehäufung bestimmt werden kann. Mit der Generierung eines künstlichen Feldes 21, 22, 22n wird diese Schwäche umgangen. Typischer Weise verwendete Clusteralgorithmen 37 sind HDBSCAN oder kMeans. Nach Abschluss des Clusteralgorithmus 37 wurden die Ortspunkte 8 einer Bewegungsspur 7 jeweils in Ortspunkte 8 eines bestimmten Feldes 21, 22, 22n kategorisiert, wobei die Außenkontur 51 des jeweiligen Feldes 21, 22, 22n noch unscharf ist.

Im folgenden Schritt werden mittels des Feldgrenzen-Identifikationsalgorithmus 38 schließlich die realen Feldgrenzen 41 bestimmt. Ausgangspunkt hierfür ist die jeweilige Außenkontur 51 welche in dem dargestellten Ausführungsbeispiel durch das jeweilige Polygon 52 beschrieben wird, welches die zusammengehörigen Ortspunkte 8 umschließt.

Während der Clusteralgorithmus 37 jeden Ortspunkt einem Cluster, einem Feld 21, 22, 22n zuordnet ist es Ziel des Feldgrenzen-Identifikationsalgorithmus 38 die realen Feldgrenzen 41 des jeweiligen Feldes 21, 22, 22n, nämlich seine konkave Hülle, welche die Ortspunkte 8 eines Clusters 21, 22, 22n umschließt zu erkennen. Hierfür wird ein bekanntes und daher nicht im Detail beschriebenes mathematisches Verfahren genutzt, welches für die Bestimmung der optimalen konkaven Hülle einen Parameter alpha 62 nutzt. Dieser wird an Hand der sogenannten Kostenfunktion 63 durch einen genetischen Algorithmus optimiert. Die Kostenfunktion 63 besteht aus 2 Bestandteilen: Die Differenz zwischen der konkaven und konvexen Hülle (*diff*) und die Anzahl der Punkte eines Clusters, welche innerhalb der konkaven Hülle liegen (*pointsinconcave*). Der Algorithmus minimiert die Kostenfunktion 63

$$cost = diff + (pointsinconcave * 0{,}9)$$

Algorithmen aus dem Bereich des maschinellen Lernens sind in den allermeisten Fällen nicht exakt. Beispielsweise erreicht der Klassifikationsalgorithmus 36 nur eine Genauigkeit von ca. 93%. Dies bedeutet für den vorliegenden Sachverhalt, dass Ortspunkte 8 auch falsch klassifiziert oder dem falschen Cluster zugeordnet werden. Für die Bestimmung der Feldgrenzen 41 müssen daher einige Ortspunkte 8 vom oben beschriebenen Berechnungsverfahren ausgeschlossen werden. Das Ausschließen von Ortspunkten 8 erfolgt iterativ. Es wird der Mittelpunkt der aktuellen Hülle und der Ortspunkte 8 bestimmt. Anschließend wird der Vektor und die Distanz zwischen den Mittelpunkten berechnet. Der Punkt am äußersten Rand in Richtung des Vektors wird entfernt. Das führt dazu, dass die Mittelpunkte näher zusammenrücken. Ist dies der Fall, werden nach gleichem Verfahren Ortspunkte 8 entfernt, bis die Mittelpunkte möglichst nah beieinanderliegen.

Sowohl die Ermittlung des Centroids 61 als auch die Bestimmung des Parameters alpha 62 haben letztlich den Effekt, dass ein Ortspunkt 8 zunächst präzise einem Feld 21, 22, 22n zugeordnet werden kann und sodann eine genauere Bestimmung der Außenkontur 51 des jeweiligen Feldes 21, 22, 22n möglich wird.

Im Ergebnis ermittelt der Feldgrenzen-Identifikationsalgorithmus 38 aus dem die Außenkontur 51 beschreibenden Polygon 52 mittels dieses Ausschlussverfahrens die tatsächliche Feldgrenze 41 des jeweiligen Feldes 21, 22, 22n. Auf diese Weise wird letztlich sichergestellt, dass die aus der Datenanalyse 17 abgeleiteten Bewegungsmuster 26 die automatische Erkennung der Feldgrenzen 41 ermöglicht. Zudem kann das Verfahren so ausgestaltet sein, dass zumindest die ermittelten Feldgrenzen 41 an externe Datenverarbeitungssysteme 53, insbesondere externe Farmmanagement-Softwaresysteme 54 exportiert werden können. Zudem können die Ergebnisse der Datenanalyse 17, zumindest das ermittelte Bewegungsmuster 26 und die ermittelte Art der Arbeit 28 der landwirtschaftlichen Arbeitsmaschine 1 an das Farmmanagement-Softwaresysteme 54 übergeben werden.

Sind die Feldgrenzen 41 identifiziert, liegt es im Rahmen der Erfindung das weitere Kennzahlen 55 daraus abgeleitet werden können. Dies können insbesondere eine oder mehrere oder alle der folgenden Kennzahlen 55 umfassen, nämlich die Gesamtfahrzeit der landwirtschaftlichen Arbeitsmaschine 1, deren tatsächliche Arbeitszeit auf einem Feld 21, 22, 22n, die angefallenen Transport- und/oder Transferzeiten, etwa Straßenfahrten 40, die Anzahl der bearbeiteten Felder 21, 22, 22n, die Größe des jeweiligen Feldes 21, 22, 22n, die durchschnittliche Fahrgeschwindigkeit der landwirtschaftlichen Arbeitsmaschine 1, die Fahrgeschwindigkeit pro Feld 21, 22, 22n, die Arbeitszeit pro Feld 21, 22, 22n sowie Stillstandzeiten. Auch diese Kennzahlen 55 können den externen Datenverarbeitungssystemen 53 und Farmmanagement-Softwaresystemen 54 zur Verfügung gestellt werden.

Zudem können die ermittelten Feldgrenzen 41 genutzt werden, um öffentlich verfügbare Daten 56, beispielsweise des Sentinel-Satelliten abzufragen. Diese öffentlich verfügbaren Daten 56 können beispielsweise Biomassedaten sein. Aus den Informationen zur Saison (beispielsweise Wetterdaten), zur Biomasse, zum Maschinentyp und der jeweiligen Position der landwirtschaftlichen Arbeitsmaschine 1, dem jeweiligen Ortspunkt 8 kann sodann die Fruchtart abgeleitet werden. Aus den Informationen zur Fruchtart, zur Saison, zur Position, zum Maschinentyp und der durchschnittlichen Geschwindigkeit der landwirtschaftlichen Arbeitsmaschine 1 kann der jeweilige Arbeitsprozess abgeleitet werden. Basis der Satellitendaten 56 kann eine Prognose über den Ertrag des jeweiligen Feldes 31, 22, 22n berechnet oder bspw. Dünge- und Bewässerungsempfehlungen abgeleitet werden.

Auf diese Weise wird es möglich, dass die aus der Datenanalyse 17 abgeleiteten Bewegungsmuster 26 die Beurteilung der Maschineneinsatzeffizienz ermöglichen und zumindest die Bestimmung der Prozesszeit und/oder der Stillstandzeit und/oder einer Transitzeit umfasst.

Es liegt im Rahmen der Erfindung, dass alle zuvor beschriebenen abgeleiteten Informationen den externen Datenverarbeitungssystemen 53 und Farmmanagement-Softwaresystemen 54 zur Verfügung gestellt werden können.

Zudem kann auf die beschriebene Weise aus dem ermittelten Bewegungsmuster 26 der landwirtschaftlichen Arbeitsmaschine 1 die Art der Arbeit 28 der landwirtschaftlichen Arbeitsmaschine 1 abgeleitet werden und eine Dokumentation 18 erstellt werden, wobei die erstellte Dokumentation 18 die automatisierte Erstellung einer Rechnung 57 umfassen kann.

**Bezugszeichenliste:**

| 1 | Landwirtschaftliche Arbeitsmaschine | 32 | Künstliche Intelligenz / KI |
|---|---|---|---|
| 2 | Anbaugerät | 33 | Maschinenlernverfahren |
| 3 | Ortsbestimmungssystem | 34 | Kennlinien |
| 4 | Mobiltelefon | 35 | Parameterabhängigkeiten |
| 5 | Bediener | 36 | Klassifizierungsalgorithmus |
| 6 | Applikationsmodul | 37 | Clusteralgorithmus |
| 7 | Bewegungsspur | 38 | Feldgrenzen-Identifikationsalgorithmus |
| 8 | Ortspunkte | 39 | Feldfahrt |
| 9 | Positionsdaten | 40 | Straßenfahrt |

(fortgesetzt)

| | | | |
|---|---|---|---|
| 10 | Zeitstempel | 41 | Feldgrenze |
| 11 | Arbeitsdaten | 42 | Kommunikationsmodul |
| 12 | Mobilfunkstrecke | 43 | Rohdatensatz |
| 13 | Empfängerstation | 44 | Erster Verarbeitungsschritt |
| 14 | Netzwerk | 45 | Kennzahl |
| 15 | Rechnersystem | 46 | Entfernung |
| 16 | Datenbank | 47 | Kreis |
| 17 | Datenanalyse | 48 | Quadrant |
| 18 | Dokumentation | 49 | Datensatz |
| 19 | Dokumentationsbuchung | 50 | Trainingsdatensatz |
| 20 | Dokumentationserfassung | 50' | Validierungsdatensatz |
| 21 | Erstes Feld | 51 | Außenkontur |
| 22 | Zweites Feld | 52 | Polygon |
| 22n | Feld | 53 | Datenverarbeitungssystem |
| | | 54 | Farmmanagement-Softwaresystem |
| 23 | Hof | 55 | Kennzahl |
| 24 | Zwischenziel | 56 | öffentlich verfügbare Daten |
| 25 | Folgeschritt | 57 | Rechnung |
| 26 | Bewegungsmuster | | |
| 27 | weiterer Verfahrensschritt | | |
| 28 | Art der Arbeit | | |
| 29 | weiterer Verfahrensschritt | 61 | Centroid |
| 30 | GPS | 62 | Parameter alpha |
| 31 | computerimplementiertes Verfahren | 63 | Kostenfunktion |

## Patentansprüche

1. Verfahren zur automatischen Erstellung einer Dokumentation (18), wobei in der Dokumentation (18) eine Arbeit einer landwirtschaftlichen Arbeitsmaschine (1) dokumentiert wird, wobei ein Ortsbestimmungssystem (3) während der Erbringung der Arbeit eine Bewegungsspur (7) der Arbeitsmaschine (1) aufzeichnet,
**dadurch gekennzeichnet, dass**
zur Generierung der Bewegungsspur (7) zumindest Positionsdaten (9) und ein den jeweiligen Positionsdaten (9) zugeordneter Zeitstempel (10) verfügbar sind und wobei die Bewegungsspur (7) analysiert wird, wobei mittels der Datenanalyse (17) ein Bewegungsmuster (26) der landwirtschaftlichen Arbeitsmaschine (1) abgeleitet und aus dem Bewegungsmuster (26) auf die Art der Arbeit (28) der landwirtschaftlichen Arbeitsmaschine (1) geschlossen wird.

2. Verfahren zur automatischen Erstellung einer Dokumentation (18) nach Anspruch 1,
**dadurch gekennzeichnet, dass**
die Positionsdaten (9) und der die Zeitinformation umfassende Zeitstempel (10) von einem in der landwirtschaftlichen Arbeitsmaschine (1) mitgeführten Mobiltelefon (4) generiert werden.

3. Verfahren zur automatischen Erstellung einer Dokumentation (18) nach Anspruch 1 oder 2,
**dadurch gekennzeichnet, dass**
die Positionsdaten (9) von einem GPS (30) generiert werden.

4. Verfahren zur automatischen Erstellung einer Dokumentation (18) nach Anspruch 1,
**dadurch gekennzeichnet, dass**
die Datenanalyse (17) ein computerimplementiertes Verfahren (31) zur Nutzung einer künstlichen Intelligenz (32) zur Ableitung des Bewegungsmusters (26) umfasst.

5. Verfahren zur automatischen Erstellung einer Dokumentation (18) nach Anspruch 4,
**dadurch gekennzeichnet, dass**
das computerimplementierte Verfahren (18) zur Nutzung einer künstlichen Intelligenz (32) zumindest ein trainierbares Maschinenlernverfahren (33) und in Kennlinien (34) hinterlegte Parameterabhängigkeiten (35) umfasst.

6. Verfahren zur automatischen Erstellung einer Dokumentation (18) nach Anspruch 5,
**dadurch gekennzeichnet, dass**
das Maschinenlernverfahren (33) zumindest einen Klassifizierungsalgorithmus (36) umfasst und das der Klassifizierungsalgorithmus (36) zumindest eine Klassifizierung nach Feldfahrt (39) und Straßenfahrt (40) umfasst.

7. Verfahren zur automatischen Erstellung einer Dokumentation (18) nach Anspruch 5,
**dadurch gekennzeichnet, dass**
das Maschinenlernverfahren (33) zumindest einen Clusteralgorithmus (37) umfasst und der Clusteralgorithmus (37) zumindest eine Unterscheidung von Feldern (21, 22, 22n) ermöglicht.

8. Verfahren zur automatischen Erstellung einer Dokumentation (18) nach Anspruch 5,
**dadurch gekennzeichnet, dass**
das Maschinenlernverfahren (33) zumindest einen Feldgrenzen-Identifikationsalgorithmus (38) umfasst und der Feldgrenzen-Identifikationsalgorithmus (38) zumindest die Identifikation von Feldgrenzen (41, 51, 52) umfasst.

9. Verfahren zur automatischen Erstellung einer Dokumentation (18) nach einem der vorhergehenden Ansprüche,
**dadurch gekennzeichnet, dass**
der Klassifizierungsalgorithmus (36), der Clusteralgorithmus (37) und der Feldgrenzen-Identifikationsalgorithmus (38) miteinander kombiniert werden, wobei die Kombination so strukturiert ist, dass die Schwächen eines vorhergehenden Algorithmus (36, 37) durch einen nachfolgenden Algorithmus (37, 38) ausgeglichen werden.

10. Verfahren zur automatischen Erstellung einer Dokumentation (18) nach einem der vorhergehenden Ansprüche,
**dadurch gekennzeichnet, dass**
aus den Positionsdaten (9) und den die Zeitinformation umfassenden Zeitstempeln (10) Kennzahlen (45, 55) abgeleitete werden und die abgeleiteten Kennzahlen (45, 55) die Differenzierung der Ortspunkte 8 innerhalb eines Algorithmus (36, 37, 38) unterstützen.

11. Verfahren zur automatischen Erstellung einer Dokumentation (18) nach einem der vorhergehenden Ansprüche,
**dadurch gekennzeichnet, dass**
zumindest einer der Algorithmen Klassifizierungsalgorithmus (36), Clusteralgorithmus (37) und/oder Feldgrenzen-Identifikationsalgorithmus (38) eine Kostenfunktion (63) anwendet und die Kostenfunktion (63) für jeden Anwendungsfall spezifisch strukturiert ist.

12. Verfahren zur automatischen Erstellung einer Dokumentation (18) nach einem der Ansprüche 4 bis 11,
**dadurch gekennzeichnet, dass**
die Datenanalyse (17) neben den Positionsdaten (9) und den die Zeitinformation umfassenden Zeitstempeln (10) weitere, maschinen- und/oder einsatzspezifische Parameter berücksichtigt.

13. Verfahren zur automatischen Erstellung einer Dokumentation (18) nach einem der Ansprüche 4 bis 12,
**dadurch gekennzeichnet, dass**
das aus der Datenanalyse (17) abgeleitete Bewegungsmuster (26) die automatische Erkennung der Feldgrenzen (41) ermöglicht.

14. Verfahren zur automatischen Erstellung einer Dokumentation (18) nach Anspruch 13,
**dadurch gekennzeichnet, dass**
die automatisch erkannten Feldgrenzen (41) an externe Datenverarbeitungssysteme (53), insbesondere externe Farmmanagement-Softwaresysteme (54) exportiert werden.

15. Verfahren zur automatischen Erstellung einer Dokumentation (18) nach einem der Ansprüche 4 bis 14,
**dadurch gekennzeichnet, dass**
das aus der Datenanalyse (17) abgeleitete Bewegungsmuster (26) die Beurteilung der Maschineneinsatzeffizienz ermöglicht und zumindest die Bestimmung der Prozesszeit und/oder der Stillstandzeit und/oder einer Transitzeit umfasst.

16. Verfahren zur automatischen Erstellung einer Dokumentation (18) nach einem der Ansprüche 4 bis 15,
**dadurch gekennzeichnet, dass**

die aus dem Bewegungsmuster (26) der landwirtschaftlichen Arbeitsmaschine (1) abgeleitete Art der Arbeit (28) der landwirtschaftlichen Arbeitsmaschine (1) eine Dokumentationserstellung (18, 19) ermöglicht.

17. Verfahren zur automatischen Erstellung einer Dokumentation (18) nach Anspruch 16,
**dadurch gekennzeichnet, dass**
die Dokumentationserstellung (18, 19) die automatisierte Erstellung einer Rechnung (57) umfasst.

18. Verfahren zur automatischen Erstellung einer Dokumentation (18) nach einem der vorhergehenden Ansprüche,
**dadurch gekennzeichnet, dass**
das oder die Ergebnisse der Datenanalyse (17), zumindest das ermittelte Bewegungsmuster (26) und die ermittelte Art der Arbeit (28) der landwirtschaftlichen Arbeitsmaschine (1) an Farmmanagementsysteme (54) übertragen werden.

19. Vorrichtung zur Durchführung des Verfahrens nach einem der vorhergehenden Ansprüche,
**dadurch gekennzeichnet, dass**
die Vorrichtung zur automatischen Erstellung einer Dokumentation (18) eingerichtet ist und in der Dokumentation (18) eine Arbeit einer landwirtschaftlichen Arbeitsmaschine (1) dokumentiert wird, wobei ein Ortsbestimmungssystem (3) während der Erbringung der Arbeit eine Bewegungsspur (7) der Arbeitsmaschine mittels Arbeitsdaten (11) aufzeichnet, wobei zur Generierung der Bewegungsspur (7) zumindest Positionsdaten (9) und ein den jeweiligen Positionsdaten (9) zugeordneter Zeitstempel (10) verfügbar sind und die Bewegungsspur (7) analysiert wird, wobei mittels der Datenanalyse (17) ein Bewegungsmuster (26) der landwirtschaftlichen Arbeitsmaschine (1) abgeleitet und aus dem Bewegungsmuster (26) auf die Art der Arbeit (28) der landwirtschaftlichen Arbeitsmaschine (1) geschlossen wird.

Fig. 1

EP 3 818 800 A1

**Fig. 2**

(A)

17 — 25

31

32

33 ——— 34, 35

36

39        40

37

21        22

38

41

26

**Fig. 3**

**Fig. 4**

Europäisches Patentamt

European Patent Office

Office européen des brevets

# EUROPÄISCHER RECHERCHENBERICHT

**Nummer der Anmeldung**

EP 20 19 4776

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 449 286 A1 (FARMDOK GMBH [AT]) 6. März 2019 (2019-03-06) | 1-19 | INV. A01B76/00 |
| Y | * Absätze [0003], [0006], [0009] - [0011], [0022] - [0048]; Abbildung 1 * | 2,13,14 | G06Q50/02 |
| | ----- | | ADD. |
| X,D | DE 10 2014 108644 A1 (AMAZONEN WERKE DREYER H [DE]) 24. Dezember 2015 (2015-12-24) | 1,3-12, 15-19 | A01B69/04 |
| Y | * Absätze [0015], [0053], [0056], [0060]; Ansprüche 1, 5; Abbildungen 1-3 * | 2,13,14 | |
| | ----- | | |

**RECHERCHIERTE SACHGEBIETE (IPC)**

A01B
G06Q

Der vorliegende Recherchenbericht wurde für alle Patentansprüche erstellt

| Recherchenort | Abschlußdatum der Recherche | Prüfer |
|---|---|---|
| München | 11. Februar 2021 | Autran, Adrien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 3 818 800 A1**

**ANHANG ZUM EUROPÄISCHEN RECHERCHENBERICHT
ÜBER DIE EUROPÄISCHE PATENTANMELDUNG NR.**

EP 20 19 4776

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2021

| Im Recherchenbericht angeführtes Patentdokument | Datum der Veröffentlichung | Mitglied(er) der Patentfamilie | Datum der Veröffentlichung |
|---|---|---|---|
| EP 3449286 A1 | 06-03-2019 | EP 3449286 A1<br>US 2019343036 A1<br>WO 2017185114 A1 | 06-03-2019<br>14-11-2019<br>02-11-2017 |
| DE 102014108644 A1 | 24-12-2015 | DE 102014108644 A1<br>EP 2957160 A1 | 24-12-2015<br>23-12-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017105493 A1
- DE 102014108644 A1
- DE 102019125507 A1